(19) Europäisches Patentamt
European Patent Office
Office européen des brevets

(11) **EP 4 231 556 A1**

(12) **EUROPEAN PATENT APPLICATION**
published in accordance with Art. 153(4) EPC

(43) Date of publication:
**23.08.2023 Bulletin 2023/34**

(21) Application number: **21880613.1**

(22) Date of filing: **15.10.2021**

(51) International Patent Classification (IPC):
*H04L 1/00* (2006.01)  *H04L 1/08* (2006.01)
*H04L 5/00* (2006.01)  *H04W 72/04* (2023.01)
*H04W 72/12* (2023.01)

(52) Cooperative Patent Classification (CPC):
**H04L 1/00; H04L 1/08; H04L 5/00; H04W 72/04;
H04W 72/12**

(86) International application number:
**PCT/KR2021/014396**

(87) International publication number:
**WO 2022/080967 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.10.2020 KR 20200133284**

(71) Applicant: **LG Electronics Inc.**
**Yeongdeungpo-gu**
**Seoul 07336 (KR)**

(72) Inventors:
• **SHIM, Jaenam**
 **Seoul 06772 (KR)**
• **HWANG, Seunggye**
 **Seoul 06772 (KR)**
• **YANG, Suckchel**
 **Seoul 06772 (KR)**
• **KIM, Jaehyung**
 **Seoul 06772 (KR)**

(74) Representative: **Mooser, Sebastian Thomas**
**Wuesthoff & Wuesthoff**
**Patentanwälte PartG mbB**
**Schweigerstraße 2**
**81541 München (DE)**

(54) **PARTIAL PUCCH TRANSMISSION METHOD AND DEVICE USING SAME**

(57) The present specification relates to a method for transmitting a partial physical uplink control channel (PUCCH) performed by a terminal in a wireless communication system, and a device using same, wherein an initial access operation is performed with a base station; PUCCH configuration information is received from the base station; the partial PUCCH is transmitted to the base station on a specific slot on the basis of the PUCCH configuration information; a partial UCI among the entire uplink control information (UCI) related to the PUCCH is transmitted through the partial PUCCH; and some symbols among multiple symbols included in the specific slot cannot be used for uplink transmission.

FIG. 6

EP 4 231 556 A1

**Description**

**TECHNICAL FIELD**

The present specification relates to wireless communication.

**BACKGROUND ART**

As more and more communication devices require more communication capacity, there is a need for improved mobile broadband communication compared to the existing radio access technology (RAT). Further, massive machine type communications (MTC) providing various services anytime anywhere by connecting many devices and objects is one of major issues to be considered in next-generation communication. In addition, there is ongoing discussion on communication system design considering a service/terminal sensitive to reliability and latency. The introduction of next-generation radio access technology considering enhanced mobile broadband communication (eMBB), massive MTC, ultra-reliable and low latency communication (URLLC), or the like is discussed. This technology is called new RAT or NR in the present disclosure for convenience.

Meanwhile, in this specification, it is intended to provide a configuration for partial PUCCH.

**DISCLOSURE**

**TECHNICAL SOLUTION**

According to an embodiment of the present specification, a method and apparatus in which partial PUCCH is transmitted on a specific slot, but partial uplink control information (UCI) of all/entire UCI related to PUCCH is transmitted in a specific slot through the partial PUCCH, wherein the specific slot is a slot in which at least one symbol among a plurality of symbols included in the specific slot cannot be used for uplink transmission, may be proposed.

**ADVANTAGEOUS EFFECTS**

According to the present specification, even if all slots are not usable for PUCCH, a configuration for transmitting even some information related to PUCCH may be provided. Through this, it is possible to transmit PUCCH without wasted resources, so that an effect of achieving uplink coverage expansion of PUCCH can be provided.

Effects that can be obtained through a specific example of the present specification are not limited to the aforementioned effects. For example, there may be various technical effects that can be understood or derived by a person having ordinary skill in the related art from the present specification. Accordingly, specific effects of the present specification are not limited to those explicitly described in the present specification, and may include various effects that can be understood or derived from technical features of the present specification.

**BRIEF DESCRIPTION OF THE DRAWINGS**

FIG. 1 illustrates a system structure of a new generation radio access network (NG-RAN) to which NR is applied.
FIG. 2 illustrates functional partitioning between NG-RAN and 5GC.
FIG. 3 illustrates a frame structure applicable in NR.
FIG. 4 illustrates an example of a frame structure for the new radio access technology (new RAT).
FIG. 5 shows examples of 5G usage scenarios to which the technical features of the present specification can be applied.
FIG. 6 is a flowchart of a method of transmitting a partial physical uplink control channel (PUCCH) according to an embodiment of the present specification.
FIG. 7 schematically illustrates a concept for transmission configuration of partial PUCCH according to an example.
FIG. 8 schematically illustrates a concept for transmission configuration of partial PUCCH according to another example.
FIG. 9 schematically illustrates an example of partial PUCCH transmission when there is a DMRS symbol in a slot.
FIG. 10 to FIG. 14 illustrate examples of PUCCH transmission and reception operations in different forms based on the above-described embodiment.
FIG. 15 is a flowchart of a method of transmitting a partial physical uplink control channel (PUCCH) from a terminal point of view according to an embodiment of the present specification.

FIG. 16 is a block diagram of an apparatus for transmitting a partial physical uplink control channel (PUCCH) from a terminal point of view according to an embodiment of the present specification.

FIG. 17 is a flowchart of a method of receiving a partial physical uplink control channel (PUCCH) from the point of view of a base station according to an embodiment of the present specification.

FIG. 18 is a block diagram of an apparatus for receiving a partial physical uplink control channel (PUCCH) from the point of view of a base station, according to an embodiment of the present specification.

FIG. 19 illustrates a communication system 1 applied to this specification.

FIG. 20 illustrates a wireless device applicable to this specification.

FIG. 21 shows another example of a wireless device applicable to the present specification.

## DETAILED DESCRIPTION

As used herein, "A or B" may mean "only A", "only B", or "both A and B". That is, "A or B" may be interpreted as "A and/or B" herein. For example, "A, B or C" may mean "only A", "only B", "only C", or "any combination of A, B, and C".

As used herein, a slash (/) or a comma (,) may mean "and/or". For example, "A/B" may mean "A and/or B". Therefore, "A/B" may include "only A", "only B", or "both A and B". For example, "A, B, C" may mean "A, B, or C".

As used herein, "at least one of A and B" may mean "only A", "only B", or "both A and B". Further, as used herein, "at least one of A or B" or "at least one of A and/or B" may be interpreted equally as "at least one of A and B".

As used herein, "at least one of A, B, and C" may mean "only A", "only B", "only C", or "any combination of A, B, and C". Further, "at least one of A, B, or C" or "at least one of A, B, and/or C" may mean "at least one of A, B, and C".

As used herein, parentheses may mean "for example". For instance, the expression "control information (PDCCH)" may mean that a PDCCH is proposed as an example of control information. That is, control information is not limited to a PDCCH, but a PDCCH is proposed as an example of control information. Further, the expression "control information (i.e., a PDCCH)" may also mean that a PDCCH is proposed as an example of control information.

Technical features individually described within a drawing in the present disclosure may be implemented individually or may be implemented simultaneously.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultrareliable and low latency communication (URLLC) is discussed. This new technology may be called new radio access technology (new RAT or NR) in the present disclosure for convenience.

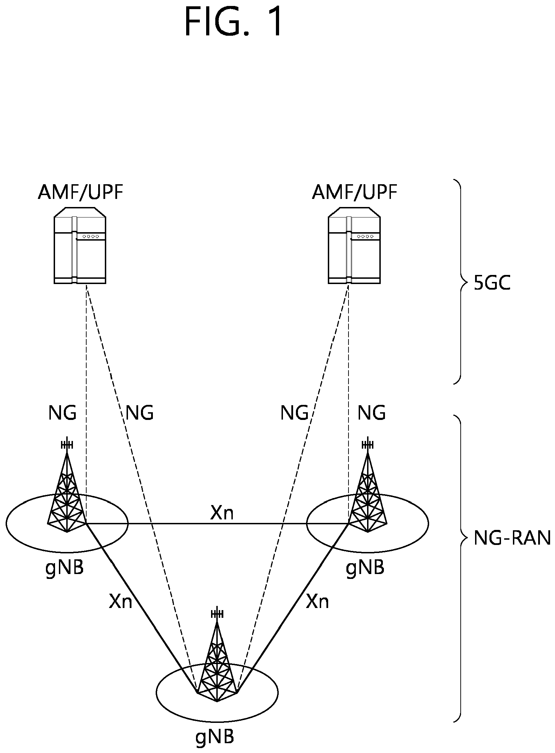

FIG. 1 illustrates a system structure of a new generation radio access network (NG-RAN) to which NR is applied.

Referring to FIG. 1, the NG-RAN may include a gNB and/or an eNB providing a user plane and a control plane protocol termination to a terminal. FIG. 1 illustrates a case of including only the gNB. The gNB and eNB are connected to each other by an Xn interface. The gNB and eNB are connected to a 5G Core Network (5GC) through an NG interface. More specifically, the gNB and eNB are connected to the access and mobility management function (AMF) through an NG-C interface and connected to a user plane function (UPF) through an NG-U interface.

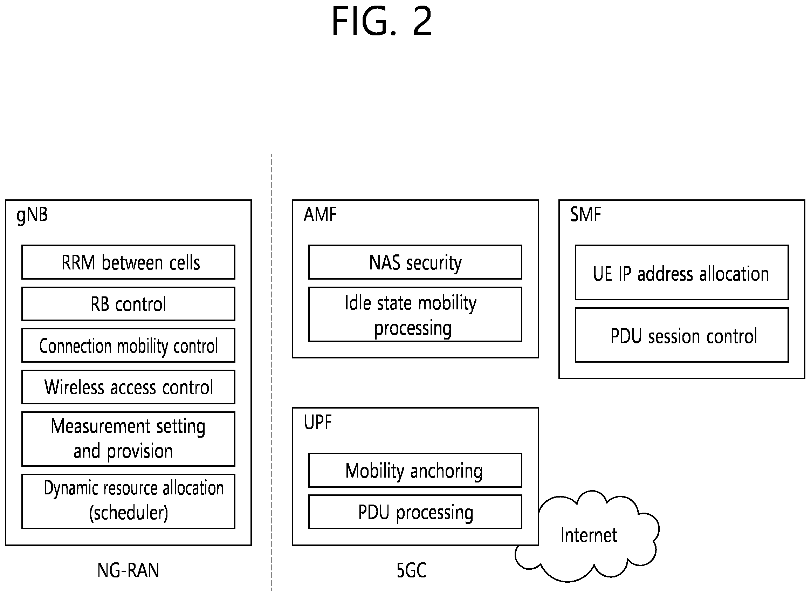

FIG. 2 illustrates functional partitioning between NG-RAN and 5GC.

Referring to FIG. 2, the gNB may provide inter-cell radio resource management (RRM), radio bearer (RB) control, connection mobility control, radio access control, measurement configuration & provision, dynamic resource allocation, and the like. An AMF may provide functions such as NAS security, idle state mobility handling, and the like. A UPF may provide functions such as mobility anchoring, PDU handling, and the like. A session management function (SMF) may provide functions such as UE IP address allocation, PDU session control, and the like.

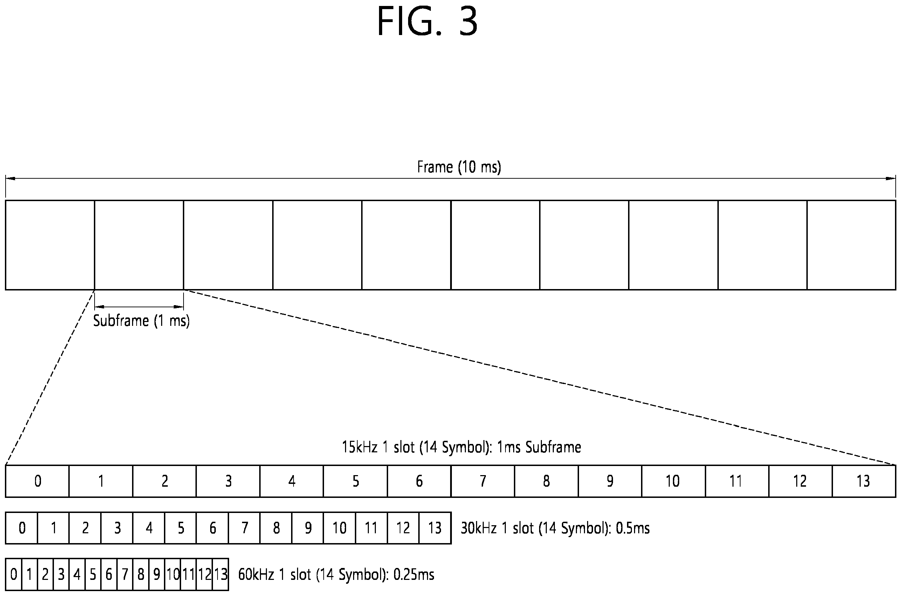

FIG. 3 illustrates a frame structure applicable in NR.

Referring to FIG. 3, a frame may consist of 10 milliseconds (ms) and may include 10 subframes of 1 ms.

A subframe may include one or a plurality of slots according to subcarrier spacing.

Table 1 below shows subcarrier spacing configuration $\mu$.

[Table 1]

| $\mu$ | $\Delta f = 2^{\mu} \cdot 15$ [kHz] | CP(Cyclic Prefix) |
|---|---|---|
| 0 | 15 | Normal |
| 1 | 30 | Normal |

(continued)

| $\mu$ | $\Delta f = 2^{\mu} \cdot 15$ [kHz] | CP(Cyclic Prefix) |
|---|---|---|
| 2 | 60 | Normal, Extended |
| 3 | 120 | Normal |
| 4 | 240 | Normal |

Table 2 below shows the number of slots in a frame ($N^{frame\,\mu}_{slot}$), the number of slots in a subframe ($N^{subframe\,\mu}_{slot}$), and the number of symbols in a slot ($N^{slot}_{symb}$) according to the subcarrier spacing configuration $\mu$.

[Table 2]

| $\mu$ | $N^{slot}_{symb}$ | $N^{frame\mu}_{slot}$ | $N^{subframe\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 3 shows $\mu = 0$, 1, and 2.

A physical downlink control channel (PDCCH) may include one or more control channel elements (CCEs) as shown in Table 3 below.

[Table 3]

| Aggregation level | Number of CCEs |
|---|---|
| 1 | 1 |
| 2 | 2 |
| 4 | 4 |
| 8 | 8 |
| 16 | 16 |

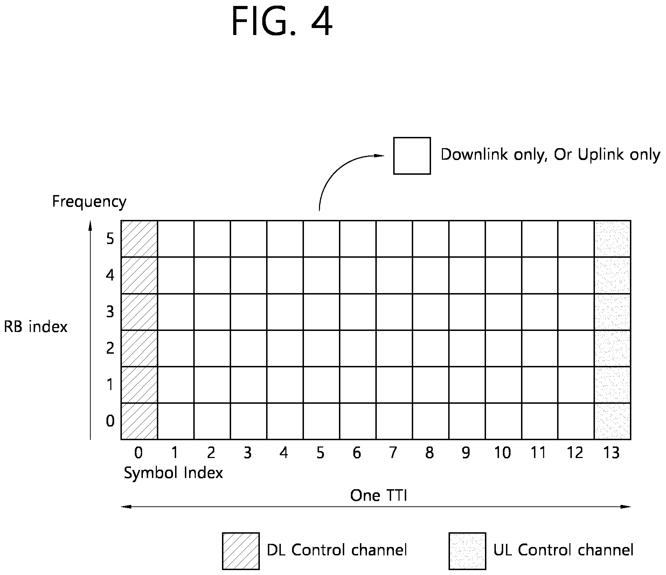

In other words, the PDCCH may be transmitted through a resource including 1, 2, 4, 8 or 16 CCEs. Here, the CCE includes six resource element groups (REGs), and one REG includes one resource block in the frequency domain and one orthogonal frequency division multiplexing (OFDM) symbol in the time domain. The following technologies/characteristics may be applied to NR. **<Self-contained subframe structure>** FIG. 4 illustrates an example of a frame structure for the new radio access technology (new RAT). In NR, as a purpose for minimizing latency, as shown in FIG. 4, a structure having a control channel and a data channel being processed with Time Division Multiplexing (TDM), within one TTI, may be considered as one type of frame structure.

In FIG. 4, an area marked with slanted lines represents a downlink control area, and an area marked in black represents an uplink control area. An area marked in black may be used for downlink (DL) data transmission or may be used for uplink (LTL) data transmission. The characteristic of such structure is that, since downlink (DL) transmission and uplink (LTL) transmission are carried out sequentially, DL data is sent out (or transmitted) from a subframe, and UL Acknowledgement/Not-acknowledgement (ACK/NACK) may also be received in the subframe. As a result, time needed until data retransmission, when a data transmission error occurs, may be reduced, and, accordingly, latency in the final data transfer (or delivery) may be minimized.

In the above-described data and control TDMed subframe structure, a time gap is needed for a transition process (or shifting process) from a transmission mode to a reception mode of the base station and LTE, or a transition process (or shifting process) from a reception mode to a transmission mode of the base station and UE. For this, in a self-contained subframe structure, some of the OFDM symbols of a time point where a transition from DL to LTL occurs may be configured as a guard period (GP).

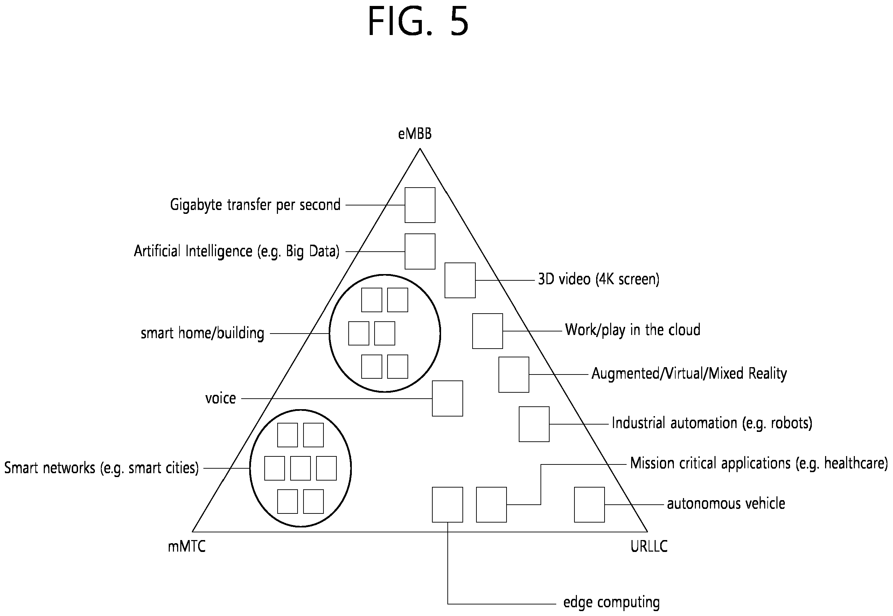

FIG. 5 shows examples of 5G usage scenarios to which the technical features of the present specification can be applied. The 5G usage scenarios shown in FIG. 5 are only exemplary, and the technical features of the present specification can be applied to other 5G usage scenarios which are not shown in FIG. 5.

Referring to FIG. 5, the three main requirements areas of 5G include (1) enhanced mobile broadband (eMBB) domain, (2) massive machine type communication (mMTC) area, and (3) ultra-reliable and low latency communications (URLLC) area. Some use cases may require multiple areas for optimization and, other use cases may only focus on only one key performance indicator (KPI). 5G is to support these various use cases in a flexible and reliable way.

eMBB focuses on across-the-board enhancements to the data rate, latency, user density, capacity and coverage of mobile broadband access. The eMBB aims ~10 Gbps of throughput. eMBB far surpasses basic mobile Internet access and covers rich interactive work and media and entertainment applications in cloud and/or augmented reality. Data is one of the key drivers of 5G and may not be able to see dedicated voice services for the first time in the 5G era. In 5G, the voice is expected to be processed as an application simply using the data connection provided by the communication system. The main reason for the increased volume of traffic is an increase in the size of the content and an increase in the number of applications requiring high data rates. Streaming services (audio and video), interactive video and mobile Internet connectivity will become more common as more devices connect to the Internet. Many of these applications require always-on connectivity to push real-time information and notifications to the user. Cloud storage and applications are growing rapidly in mobile communication platforms, which can be applied to both work and entertainment. Cloud storage is a special use case that drives growth of uplink data rate. 5G is also used for remote tasks on the cloud and requires much lower end-to-end delay to maintain a good user experience when the tactile interface is used. In entertainment, for example, cloud games and video streaming are another key factor that increases the demand for mobile broadband capabilities. Entertainment is essential in smartphones and tablets anywhere, including high mobility environments such as trains, cars and airplanes. Another use case is augmented reality and information retrieval for entertainment. Here, augmented reality requires very low latency and instantaneous data amount.

mMTC is designed to enable communication between devices that are low-cost, massive in number and battery-driven, intended to support applications such as smart metering, logistics, and field and body sensors. mMTC aims ~10 years on battery and/or ~1 million devices/km$^2$. mMTC allows seamless integration of embedded sensors in all areas and is one of the most widely used 5G applications. Potentially by 2020, IoT devices are expected to reach 20.4 billion. Industrial IoT is one of the areas where 5G plays a key role in enabling smart cities, asset tracking, smart utilities, agriculture and security infrastructures.

URLLC will make it possible for devices and machines to communicate with ultra-reliability, very low latency and high availability, making it ideal for vehicular communication, industrial control, factory automation, remote surgery, smart grids and public safety applications. URLLC aims ~1ms of latency. URLLC includes new services that will change the industry through links with ultra-reliability / low latency, such as remote control of key infrastructure and self-driving vehicles. The level of reliability and latency is essential for smart grid control, industrial automation, robotics, drone control and coordination.

Next, a plurality of use cases included in the triangle of FIG. 5 will be described in more detail.

5G can complement fiber-to-the-home (FTTH) and cable-based broadband (or DOCSIS) as a means of delivering streams rated from hundreds of megabits per second to gigabits per second. This high speed can be required to deliver TVs with resolutions of 4K or more (6K, 8K and above) as well as virtual reality (VR) and augmented reality (AR). VR and AR applications include mostly immersive sporting events. Certain applications may require special network settings. For example, in the case of a VR game, a game company may need to integrate a core server with an edge network server of a network operator to minimize delay.

Automotive is expected to become an important new driver for 5G, with many use cases for mobile communications to vehicles. For example, entertainment for passengers demands high capacity and high mobile broadband at the same time. This is because future users will continue to expect high-quality connections regardless of their location and speed. Another use case in the automotive sector is an augmented reality dashboard. The driver can identify an object in the dark on top of what is being viewed through the front window through the augmented reality dashboard. The augmented reality dashboard displays information that will inform the driver about the object's distance and movement. In the future, the wireless module enables communication between vehicles, information exchange between the vehicle and the supporting infrastructure, and information exchange between the vehicle and other connected devices (e.g., devices accompanied by a pedestrian). The safety system allows the driver to guide the alternative course of action so that he can drive more safely, thereby reducing the risk of accidents. The next step will be a remotely controlled vehicle or self-driving vehicle. This requires a very reliable and very fast communication between different self-driving vehicles and between vehicles and infrastructure. In the future, a self-driving vehicle will perform all driving activities, and the driver will focus only on traffic that the vehicle itself cannot identify. The technical requirements of self-driving vehicles require ultra-low latency and high-speed reliability to increase traffic safety to a level not achievable by humans.

Smart cities and smart homes, which are referred to as smart societies, will be embedded in high density wireless sensor networks. The distributed network of intelligent sensors will identify conditions for cost and energy-efficient maintenance of a city or house. A similar setting can be performed for each home. Temperature sensors, windows and heating controllers, burglar alarms and appliances are all wirelessly connected. Many of these sensors typically require low data rate, low power and low cost. However, for example, real-time HD video may be required for certain types of devices for monitoring.

The consumption and distribution of energy, including heat or gas, is highly dispersed, requiring automated control of distributed sensor networks. The smart grid interconnects these sensors using digital information and communication technologies to collect and act on information. This information can include supplier and consumer behavior, allowing the smart grid to improve the distribution of fuel, such as electricity, in terms of efficiency, reliability, economy, production sustainability, and automated methods. The smart grid can be viewed as another sensor network with low latency.

The health sector has many applications that can benefit from mobile communications. Communication systems can support telemedicine to provide clinical care in remote locations. This can help to reduce barriers to distance and improve access to health services that are not continuously available in distant rural areas. It is also used to save lives in critical care and emergency situations. Mobile communication based wireless sensor networks can provide remote monitoring and sensors for parameters such as heart rate and blood pressure.

Wireless and mobile communications are becoming increasingly important in industrial applications. Wiring costs are high for installation and maintenance. Thus, the possibility of replacing a cable with a wireless link that can be reconfigured is an attractive opportunity in many industries. However, achieving this requires that wireless connections operate with similar delay, reliability, and capacity as cables and that their management is simplified. Low latency and very low error probabilities are new requirements that need to be connected to 5G.

Logistics and freight tracking are important use cases of mobile communications that enable tracking of inventory and packages anywhere using location-based information systems. Use cases of logistics and freight tracking typically require low data rates, but require a large range and reliable location information.

Hereinafter, the present specification is demonstrated.

Coverage enhancement (CE) is a study item and is continuously being discussed in 3GPP. This means coverage extension for an uplink signal, and discussions are being conducted on three topics: PUSCH, PUCCH, and OTHERS. In the existing NR, repetition is performed to extend the coverage of PUCCH. To summarize this:

- PUCCH repetition applies only to PUCCH formats 1, 3, and 4 (long PUCCH).
- The number of repetitions is nrofSlots = n2, n4, n8 (PUCCH-FormatConfig), and there are three cases.
- Repeated PUCCHs have the same number of consecutive/contiguous symbols, the same first symbol, and all have the same position in the slot.
- Frequency hopping during repetition is applied to 'startingPRB for even number slots, secondHopPRB for odd number of slots' when interslotFrequencyHopping is configured.
- The UE does not multiplex different UCI types of repeating PUCCH. Therefore, when different PUCCHs overlap in a section within a slot, the UE transmits only one PUCCH according to the priority rule (HARQ-ACK > SR > CSI) and drops the remaining PUCCH (s) or transmits 'Earlier starting PUCCH' (with same priority).

The PUCCH repetition is performed only for a long PUCCH and at the same location within each slot, and therefore, the actual number of repetitions may be less than the configured number. In particular, as mentioned above, since a special slot (S slot) includes downlink, flexible, and uplink symbols, it may be difficult to perform PUCCH repetition. Transmission of PUCCH repetitions in S slots through UCI split can also be considered as one method, but this has a limitation in that the gain in terms of latency reduction is higher than in terms of coverage extension. As a PUCCH repetition of a new method, as in the conventional PUSCH repetition type B, a method of repeatedly transmitting consecutive/contiguous symbols rather than designating and repeating a starting symbol and a length within a slot may be considered.

As such, as one of the PUCCH CE schemes, many methods of using S slots during repetition have been proposed. However, since the S slot includes all D, F, and U symbols, PUCCH transmission is restricted. In conventional PUCCH transmission, if an invalid symbol is included among symbols specified by designating a starting symbol and a length within a slot, the UE does not transmit PUCCH in the corresponding slot. Therefore, this becomes a major bottleneck for repetition aimed at PUCCH CE. The present specification is proposed as a way to improve this.

One of the proposed methods is that when the PUCCH is configured in a slot in which transmission is impossible according to the starting symbol and length of the slot, the UE may copy/extract/select only high-priority UCI content from among the UCI content of the PUCCH, encode it, create a short PUCCH, and transmit the short PUCCH in a corresponding slot. This is a method of transmitting a PUCCH in a slot that could not be transmitted in the conventional art without significantly changing the PUCCH repetition framework and lowering the delay of the transmission time of the existing PUCCH. Therefore, by increasing the PUCCH transmission probability in the slot, improvement in CE performance is expected as a result.

In the following description, copying of UCI may be interpreted as selecting/extracting some/partial content from the corresponding UCI. In addition, as an example of UCI copying, the LTE/terminal may generate the second UCI by copying/selecting/extracting some/partial content from the first UCI after generating the entire first UCI, unlike this, the second UCI may be directly generated without generating the first UCI. For example, after determining content(s) to be included in the second UCI, the UE/terminal may generate the second UCI without generating the first UCI. The first UCI may be referred to as an original UCI, and the second UCI may be referred to as a partial UCI.

In the following, when the distinction between the first UCI and the second UCI is clear from the context, the expressions 'first' and 'second' may be omitted and briefly described as UCI. Similarly, a PUCCH carrying a first UCI may be referred to as a first PUCCH, and a PUCCH carrying a second UCI may be referred to as a second PUCCH. When the distinction between the first PUCCH and the second PUCCH is clear in context, the expressions 'first' and 'second' may be omitted and briefly described as PUCCH. The first PUCCH may also be referred to as an original PUCCH. The second PUCCH may be referred to as partial PUCCH.

On the other hand, in the description to be described later, the division (index) of each method is for convenience of description, and each method does not necessarily have to be independently performed. In addition, those skilled in the art can understand that a combination of a plurality of methods that do not conflict with each other may be implemented in one specification.

Additional advantages, objects and features of the present disclosure will be set forth in part from the following description and will become apparent to those skilled in the art in part from a review of the following or may be learned from practice of the present specification. The objectives and other advantages of the present specification may be realized and attained by the structure particularly pointed out in the description and claims set forth herein, as well as in the accompanying drawings.

As described above, according to the existing NR PUCCH transmission method, the LTE transmits PUCCH only when the entire interval is available for PUCCH in a corresponding slot, otherwise it does not transmit. At this time, there are many cases in which PUCCH transmission is impossible due to the presence of downlink and flexible symbols in special slots (S slots) including all downlink, flexible and uplink symbols, so resources are wasted severely.

Therefore, in the present specification, partial PUCCH is introduced to provide a configuration for transmitting even partial information related to PUCCH even if the entire slot is not available for PUCCH. And Through this, it is possible to transmit the PUCCH without wasted resources, and an example of achieving the effect of achieving the uplink coverage expansion of the PUCCH is presented. The contents of this will be explained through drawings as follows.

Hereinafter, for a better understanding of the examples of the present specification, the disclosure of the present specification will be described through drawings. The following drawings are made to explain a specific example of the present specification. Since the names of specific devices or names of specific signals/messages/fields described in the drawings are provided as examples, the technical features of the present specification are not limited to the specific names used in the drawings below.

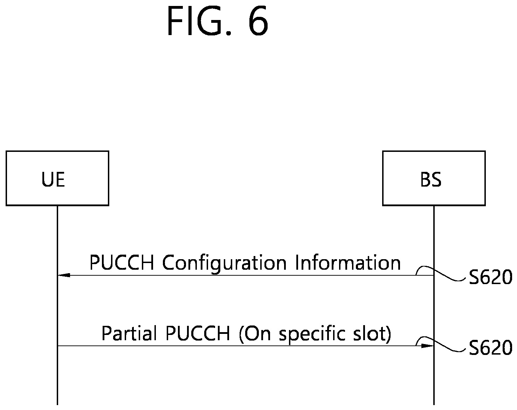

FIG. 6 is a flowchart of a method of transmitting a partial physical uplink control channel (PUCCH) according to an embodiment of the present specification.

According to FIG. 6, the LTE/terminal may receive PUCCH configuration information from a base station (S610). Since a more specific embodiment for this is the same as that described later (and/or previously described), repeated description of redundant content will be omitted for convenience of description.

The UE/terminal may transmit the partial PUCCH on a specific slot to the base station based on the PUCCH configuration information (S620). Since a more specific embodiment for this is the same as that described later (and/or previously described), repeated description of redundant content will be omitted for convenience of description.

Here, partial UCI among all uplink control information (UCI) related to PUCCH may be transmitted through the partial PUCCH. In addition, the specific slot may be a slot in which at least one symbol among a plurality of symbols included in the specific slot cannot be used for uplink transmission. Since a more specific embodiment for this is the same as that described later (and/or previously described), repeated description of redundant content will be omitted for convenience of description.

For example, the specific slot may be is a special slot or an uplink slot of which at least a symbol cannot be used. Since a more specific embodiment for this is the same as that described later (and/or previously described), repeated description of redundant content will be omitted for convenience of description.

For example, the special slot may include an uplink symbol, a downlink symbol, and a flexible symbol. Since a more specific embodiment for this is the same as that described later (and/or previously described), repeated description of redundant content will be omitted for convenience of description.

For example, the partial UCI may be configured based on the priority(s) of all UCI. Here, for example, the priority may be higher in the order of HARQ-ACK, scheduling request (SR), channel state information (CSI) part 1, and CSI part 2. Since a more specific embodiment for this is the same as that described later (and/or previously described), repeated description of redundant content will be omitted for convenience of description.

For example, the UE/terminal may transmit the partial PUCCH based on available symbols among the plurality of symbols. Here, for example, when the available symbols are not contiguous/consecutive, the UE/terminal may transmit the partial PUCCH based on specific symbols among the available symbols. Here, for example, the specific symbols are symbols with the largest number of contiguous/consecutive symbols among the available symbols, and the UE/terminal may transmit the partial PUCCH on symbols with the largest number of contiguous/consecutive symbols. Here, for example, the specific symbols are non-contiguous/ consecutive symbols within the specific slot in the time domain, and the UE/terminal may separate and transmit the partial PUCCH on the non-contiguous/consecutive symbols. Since a more specific embodiment for this is the same as that described later (and/or previously described), repeated description of redundant content will be omitted for convenience of description.

For example, the UE/terminal may repeatedly transmit the partial PUCCH. Since a more specific embodiment for this is the same as that described later (and/or previously described), repeated description of redundant content will be omitted for convenience of description.

As described above, according to the present specification, even if all slots are not usable for PUCCH, a configuration for transmitting even partial information related to PUCCH may be provided. Through this, it is possible to transmit PUCCH without wasted resources, so that an effect of achieving uplink coverage expansion of PUCCH can be provided.

Effects obtainable through specific examples of the present specification are not limited to the effects listed above. For example, there may be various technical effects that a person having ordinary skill in the related art can understand or derive from the present specification. Accordingly, the specific effects of the present specification are not limited to those explicitly described in the present specification, and may include various effects that can be understood or derived from the technical features of the present specification.

Hereinafter, the embodiment of this drawing will be described in detail for each item. The configuration, operation and other features of the present specification will be made clear by the embodiments of the present specification described with reference to the accompanying drawings.

PUCCH transmission of the existing NR is not performed when a starting symbol and a length are configured in a slot and an unavailable symbol is included among the corresponding symbols. This is particularly likely to include an S slot when PUCCH repetition is configured, and therefore, it is highly likely that PUCCH transmission will not occur in that slot. Since this is a waste of resources, the present specification is proposed.

This is largely composed of two methods. First, a method of copying a part of UCI according to the priority rules covered in the following Section 1 to Section 2 to create a new PUCCH and transmitting the PUCCH in the corresponding slot, and secondly, a method of transmitting only some symbols of the generated PUCCH, which is covered in the following Section 3, is described.

1. Examples of copy/duplication and configuration of UCI with high priority

The method proposed below is described by assuming/targeting repetition of PUCCH to which polar code is applied, but the present specification is not limited thereto, and for example, it is possible to extend and apply a PUCCH to which a Reed-Muller (RM) code is applied and a PUCCH with no repetition. When the UCI meets one or both of the following two conditions, the LTE may copy at least a part of the UCI having a higher priority and perform channel coding independently of the UCI before copying to generate the PUCCH.

For example, the first UCI before copying and the copied second UCI may follow the same channel coding scheme in consideration of the channel coding scheme expected from the structure of NR PUCCH or the structure of S slot to U slot. For example, the UE/terminal may apply an RM code for which a separate CRC is not transmitted to the copied second UCI. For example, for the PUCCH carrying the copied second UCI, the UE may apply the RM code regardless of the channel coding scheme (RM code, Polar code) of the first UCI before copying. The base station may assume such an operation of the UE/terminal.

(1) When PUCCH repetition is configured (e.g., when signaling of nrofSlots > 1 of higher layer parameter PUCCH-FormatConfig is received by the UE), the UE may independently encode at least a portion/part of the UCI (UCI contents) of the PUCCH by copying at least a portion/part having a high priority. For example, a UCI for PUCCH repetition may be determined based on a priority between UCI contents.

(2) If there is a slot in which PUCCH transmission is configured or a slot in which PUCCH transmission is impossible among a plurality of slots, (e.g., all or some/part/portion of the symbols from startingSymbolIndex to nrofSymbols in the slot cannot be used for PUCCH transmission), The UE may copy and independently encode a part of the UCI of the PUCCH having a high priority. Hereinafter, for convenience, a slot in which PUCCH transmission is impossible due to all or some/part/portion of the symbols from startingSymbolIndex to nrofSymbols within the corresponding slot is referred to as X slot. (The X slot may be a U slot or an S slot.) In this case, the LTE/terminal may perform UCI copying according to the number of (available) U symbols in the X slot. For example, a payload of a high priority UCI to be copied may be determined according to the number of U symbols in the corresponding X slot. For example, if the number of U symbols available by the UE in X slot is N, the payload of the high priority UCI to be copied can be determined as a function of N.

A high priority UCI (e.g., second UCI) generated by copying according to the priority rule (Section 2) may be treated as an independent UCI from the first UCI. For example, the LTE/terminal may perform channel coding → CRC attachment → encoding → rate matching → multiplexing for the second UCI in order, and a part of processes may be omitted. Copying of such a high priority UCI may be performed at any stage prior to channel coding in an existing PUCCH generation procedure.

Alternatively, in order to maintain the existing PUCCH generation procedure, the UE may copy a UCI having a higher priority among two UCIs diverged in a segmentation step and treat it as a UCI having a higher priority. In this case, a PUCCH generated by concatenation (e.g., a first PUCCH carrying a first UCI) and a PUCCH using only a second UCI copied according to a priority rule in a segmentation step (e.g., a second PUCCH) are generated. The UE/terminal performing the copying may transmit the second PUCCH in an X slot in which PUCCH repetition is configured but the first PUCCH before copying cannot be transmitted.

The second PUCCH composed of copied high-priority UCI may be transmitted in a special slot (S slot) among UL resources in which repetition is configured, but the present specification is not limited thereto. ), the second PUCCH transmission scheme can be applied when transmission of the entire PUCCH is restricted.

The second PUCCH composed of copied high-priority UCI may be transmitted in a special slot (S slot) among UL resources in which repetition is configured, but the present specification is not limited thereto. That is, for example, when transmission of the all/entire PUCCH is limited because some symbols are not available even in a U slot, the second PUCCH transmission scheme can be applied.

1. Priority rules for copying UCI

For example, the priority rule for copying UCI is based on the priority rule for transmission/drop between collided PUCCHs when repeating an existing PUCCH, but the priority rule can be further subdivided and applied. For example, the priority for copying UCI may basically have a higher priority in the order of HARQ-ACK, SR, CSI part 1, and CSI part 2.

However, according to an example of the present specification, even if different UCI contents have the same priority, the LTE/terminal may copy and use only some (or a part/portion) of them or may include a plurality of contents. For example, all cases in which the original UCI before copying includes the copied UCI according to the priority rule may be considered.

For example, if the original UCI consists of HARQ-ACK and SR, the LTE can copy and use the all/entire UCI part corresponding to the HARQ-ACK, or copy and use a part/portion of the UCI part corresponding to the HARQ-ACK. Alternatively, the all/entire UCI corresponding to the HARQ-ACK and a part/portion of the SR may be included, or the all/entire of the HARQ-ACK and the SR may be used.

According to the priority rule (e.g., HARQ-ACK>SR>CSI Part 1> CSI Part 2), in the case of UCI contents having the same priority, the UE may subdivide/determine the priority in consideration of configured scheduling/HARQ timing, UE processing time, and the like. For example, the priority of UCI content may be hierarchically configured, and for convenience, the priority rule (e.g., HARQ-ACK>SR>CSI Part 1> CSI Part 2) may be referred to Level 1 (L1)-priority, and the priority subdivided for selecting some/part/portion of the UCI contents having the same L1 priority may be referred to as Level 2 (L2)-priority. Further, if there is no confusion between the two, the L1/L2 notation can be omitted.

For example, when it is necessary to select an HARQ-ACK to be included in the second UCI among HARQ-ACKs having the same L1 priority, the HARQ with the smallest UE processing time may have a high L2 priority, or an HARQ in which the number of symbols in the time domain counted after the UE processing time is the highest may have a high L2 priority. This is to adjust the response time of individual HARQ close to the average response time or to immediately respond to HARQ that requires a quick response as needed.

Or, in consideration of the configured scheduling/HARQ timings K0 (i.e. Number of slots from the slot with DL grant PDCCH to the slot with the corresponding PDSCH transmission), K1 (i.e. Number of slots from the slot with PDSCH to the slot with the corresponding HARQ-ACK transmission), and K2 (i.e. Number of slots from the slot with UL grant PDCCH to the slot with the corresponding PUSCH transmission), detailed L2 priorities may be given/determined in the order of 'K0+K1 length', 'K2 length', and the like.

2. Transmission method of PUCCH configured with UCI with high priority in X slot

The second UCI (e.g., the UCI copied according to the method in Section 1 based on the priority rule in Section 1.1) is targeted for transmission in an S slot in which repetition is configured, but even in a U slot, the second UCI generation/transmission method can be applied to a slot in which the PUCCH prior to copying is not transmitted. For convenience, the PUCCH before copying is referred to as the original PUCCH (or first PUCCH). The transmission method of the second PUCCH configured with the actual UCI with high priority in the X slot may be defined by the method described below (by prior agreement).

2.1. Transmission method of ta second PUCCH configured with UCI with high priority in X slot once

For example, the LTE may transmit a second PUCCH configured with a second UCI with high priority once per slot for resources capable of PUCCH transmission in X slots.

If N symbols usable by the UE within X slots are contiguous/consecutive, the UE can transmit the corresponding PUCCH only for N or less symbols (e.g., PUCCH transmission having a length of N symbols or less).

Alternatively, if the symbols usable by the LTE in the X slot are not contiguous/consecutive (as a whole), the LTE may select and use only a set of contiguous/consecutive symbols having the largest number of usable contiguous/consecutive symbols within X slots for PUCCH transmission; the LTE may select and use only sets of contiguous/consecutive symbols prioritized in time and used for PUCCH transmission; or the LTE may separate and transmit the PUCCH in the time domain so that the symbols through which the PUCCH is transmitted are not contiguous/consecutive.

In this case, for example, the UE may fix and use the length of the rate matching output sequence to the number of symbols transmitting the actual UCI with high priority PUCCH in the X slot.

Regarding the transmission of the second PUCCH configured with such UCI with high priority, if the PUCCH including the DMRS is transmitted through the U slot of the same PRB as the PRB in which the second PUCCH is transmitted within a certain time from the transmission time of the second PUCCH, the UE may not include a DMRS when transmitting the second PUCCH (e.g., DMRS transmission for the second PUCCH may be omitted).

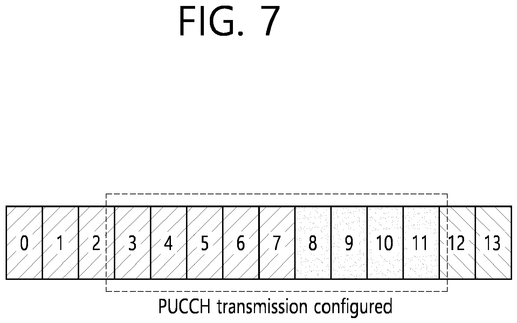

FIG. 7 schematically illustrates a concept for transmission configuration of partial PUCCH according to an example.

For example, as shown in the figure of FIG. 7, when PUCCH transmission is configured in Symbol 3 to Symbol 11, and symbols usable for PUCCH transmission in the corresponding slot are Symbol 8 to Symbol 11 (marked with dots in the Figure), the UE can transmit PUCCH configured with UCI with high priority using 4 or less contiguous/consecutive symbols among Symbol 8 to Symbol 11.

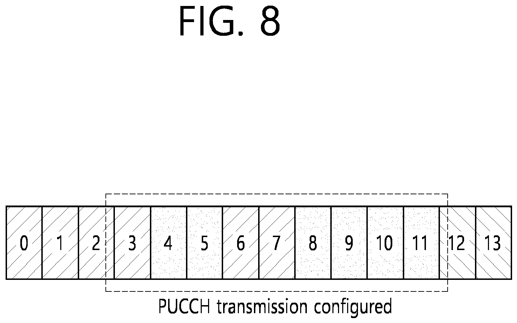

FIG. 8 schematically illustrates a concept for transmission configuration of partial PUCCH according to another example.

As another example, as shown in the figure of FIG. 8, PUCCH transmission is configured in Symbol 3 to Symbol 11, and symbols usable for PUCCH transmission in the corresponding slot are Symbol 4 to Symbol 5 and Symbol 8 to Symbol 11 (marked with dots in the Figure), the LTE may transmit PUCCH configured with UCI with high priority on symbols 8 to 11 with a large number of consecutive symbols, transmit Symbol 4 to Symbol 5 preceding in time, or configure the PUCCH with a length of 6 symbols and divide it into Symbol 4 to Symbol 5 and Symbol 8 to Symbol 11 and transmit them. For example, when the PUCCH configured with UCI with high priority is composed of N symbols, the UE can transmit only contiguous/consecutive symbols for which the number of contiguous/consecutive symbols capable of PUCCH transmission is N or more. For example, when N=3 and symbols capable of PUCCH transmission are given as shown in FIG. 8, only 3 consecutive symbols among Symbol 8 to Symbol 11 can be transmitted.

This transmission technique has a low code rate and is suitable for CE. However, there is a high possibility that the number of repetitions is less than that of the method in Section 2.2, but there is an advantage in that the probability of successful PUCCH decoding of the base station increases because the number of transmissions is large for a higher priority UCI than the existing PUCCH repetitions.

2.2. Transmission method of the second PUCCH configured with UCI with high priority in X slot multiple times

The LTE may repeatedly transmit PUCCH configured with UCI with high priority for resources capable of PUCCH transmission in X slots. In this case, the total sum of the number of transmissions of the original PUCCH and the second PUCCH configured with UCI with high priority may be transmitted beyond the configured number of repetitions.

In this case, the UE may transmit the second PUCCH configured with UCI with high priority only to consecutive symbols in the slot, and may transmit all or some/part/portion of the transmittable symbols regardless of the continuation of the symbols.

This transmission technique has a high number of repetitions and is suitable for CE. However, although the code rate is higher than that of the method in Section 2.1, there is an advantage in that the probability of successful PUCCH decoding of the base station increases because the number of transmissions is large for UCI having a higher priority than the existing PUCCH repetition.

Configuration of Partial PUCCH and Placement in Slots

When a slot in which PUCCH transmission is configured is an X slot and thus transmission of the entire PUCCH (hereinafter referred to as partial PUCCH) may be transmitted. This method can be applied when N>M, assuming that nrofSymbols, which is the number of symbols required for PUCCH transmission, is N and the number of symbols transmittable in a slot is M. For example, the UE may not transmit partial PUCCH when M is less than or equal to a specific number of symbols or M/N is less than or equal to a specific ratio, and may transmit partial PUCCH when M is greater than or equal to a specific number of symbols or M/N is greater than or equal to a specific ratio..

The partial PUCCH may be a copy of the original PUCCH in symbol units, or may be composed of symbols excluding DMRS accompanying the original PUCCH contiguously/consecutively. Alternatively, the partial PUCCH may be rate matching of the (previously generated) original PUCCH, or may be a PUCCH generated by copying a part/portion of encoded bits after channel coding of the (previously generated) original PUCCH. That is, the partial PUCCH may be a partial copy of the original PUCCH at the information (UCI) level, the encoded bit (channel-coded UCI) level, or the symbol level.

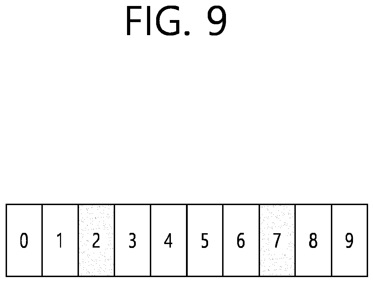

FIG. 9 schematically illustrates an example of partial PUCCH transmission when there is a DMRS symbol in a slot.

For example, as shown in FIG. 9, if the original PUCCH consists of a total of 10 symbols, the DMRS is deployed at symbol indexes 2 and 8, and the number of symbols that can be transmitted in a slot is 8, the partial PUCCH symbols may be symbol indexes 0, 1, 3, 4, 5, 6, 8, or 9 of FIG. 9, or symbols 0 to 7.

Alternatively, if the number of symbols that can be transmitted in a slot is 5, the partial PUCCH symbols may be symbol indices 0, 1, 3, 4, or 5, or symbols 0 to 4.

For example, partial PUCCH symbols may be determined in ascending order or descending order of indexes among symbol indices of (existing) original PUCCHs.

For example, if the original PUCCH consists of a total of 12 symbols and has symbol indexes 0 to 11, and the partial PUCCH consists of 5 symbols, the partial PUCCHs may correspond to symbol indexes 0 to 4 of the original PUCCH or symbol indexes 7 to 11.

Alternatively, the symbol index of the original PUCCH may be discontinuously arranged according to a predefined method. For example, the UE may configure a partial PUCCH by selecting one or several of 1st UCI and/or 2nd UCI and/or 3rd UCI among the symbols of the UCI multiplexed PUCCH described below.

Hereinafter, the correlation between PUCCH DMRS and UCI symbols will be described through a table.

[Table 4]

| PUCCH duration (symbols) | PUCCH DMRS symbol indices | Number of UCI symbol indices sets $N_{\mathrm{UCI}}^{\mathrm{set.}}$ | 1st UCI symbol indices set $S_{\mathrm{UCI}}^{(1)}$ | $S_{\mathrm{UCI}}^{(2)}$ 2nd UCI symbol indices set | $S_{\mathrm{UCI}}^{(3)}$ 3rd UCI symbol indices set |
|---|---|---|---|---|---|
| 4 | {1} | 2 | {0,2} | {3} | - |
| 4 | {0,2} | 1 | {1,3} | - | - |
| 5 | {0, 3} | 1 | {1, 2, 4} | - | - |
| 6 | {1, 4} | 1 | {0, 2, 3, 5} | - | - |
| 7 | {1, 4} | 2 | {0, 2, 3, 5} | {6} | - |
| 8 | {1, 5} | 2 | {0, 2, 4, 6} | {3, 7} | - |
| 9 | {1, 6} | 2 | {0, 2, 5,7} | {3, 4, 8} | - |
| 10 | {2, 7} | 2 | {1, 3, 6, 8} | {0, 4, 5, 9} | - |
| 10 | {1, 3, 6, 8} | 1 | {0,2,4,5,7,9} | - | - |
| 11 | {2, 7} | 3 | {1,3,6,8} | {0,4,5,9} | {10} |
| 11 | {1,3,6,9} | 1 | {0,2,4,5,7,8,10} | - | - |
| 12 | {2, 8} | 3 | {1,3,7,9} | {0,4,6,10} | {5, 11} |
| 12 | {1,4,7,10} | 1 | {0,2,3,5,6,8,9,11} | - | - |
| 13 | {2, 9} | 3 | {1,3,8,10} | {0,4,7,11} | {5,6,12} |

(continued)

| PUCCH duration (symbols) | PUCCH DMRS symbol indices | Number of UCI symbol indices sets $N_{\text{UCI}}^{\text{set.}}$ | 1st UCI symbol indices set $S_{\text{UCI}}^{(1)}$ | $S_{\text{UCI}}^{(2)}$ 2nd UCI symbol indices set | $S_{\text{UCI}}^{(3)}$ 3rd UCI symbol indices set |
|---|---|---|---|---|---|
| 13 | {1,4,7,11} | 2 | {0,2,3,5,6,8,10,12} | {9} | - |
| 14 | {3, 10} | 3 | {2,4,9,11} | {1,5,8,12} | {0,6,7,13} |
| 14 | {1,5,8,12} | 2 | {0,2,4,6,7,9,11,13} | {3, 10} | - |

Regarding the partial PUCCH, in a state in which the LTE encodes UCI based on M symbols for which original PUCCH transmission is set (previously) and generates coded bit(s) (e.g. Z bit(s)), the UE may select Y bits (s) corresponding to L symbols, which is the number of usable symbols in X slots, among the corresponding Z bit (s), and may map the selected Y bits to usable symbols in X slots. For example, the corresponding Y bit(s) may be determined as Y bit(s) from the first MSB within the corresponding Z bit(s). Alternatively, in order to facilitate RE level combining with PUCCH in other slots, within the Z bit (s) corresponding to the above M symbols, the LTE may extract Y bit(s) matching the L symbol indices in the X slot and map them to L symbols. Here, the Y bit(s) may be set including CRC.

For example, the UE may copy part/portion or all of the DMRS of the original PUCCH for partial PUCCH. The UE may determine whether to copy DMRS for partial PUCCH based on higher layer signaling, e.g., PUCCH configuration. For example, the UE may copy the DMRS only when PUCCH repetition is configured and the PUCCH is repeated in the same PRB (e.g., when frequency hopping is not configured). Transmission of the proposed partial PUCCH is repetition of the same symbol when transmitted by PUCCH repetition, so it can be used for detection of uplink time sync.

When the partial PUCCH is repeated in several slots, that is, when the PUCCH repetition is configured so that the UE can transmit a plurality of original PUCCHs and a plurality of partial PUCCHs, the plurality of partial PUCCHs may not be the same. For example, if the original PUCCH has a symbol length of 8 and transmits 4 partial PUCCHs, and the symbol length of each partial PUCCH is 4, partial PUCCHs can be configured as shown in Table 5 below.

[Table 5]

| | Symbol index of original PUCCH(1,2,3,4,5,6,7,8) |
|---|---|
| 1st partial PUCCH | 1, 2, 3, 4 |
| 2nd partial PUCCH | 3, 4, 5, 6 |
| 3rd partial PUCCH | 5, 6, 7, 8 |
| 4th partial PUCCH | 7, 8, 1, 2 |

Hereinafter, for a better understanding of the examples of the present specification, the disclosure of the present specification will be described through drawings. The following drawings are made to explain a specific example of the present specification. Since the names of specific devices or names of specific signals/messages/fields described in the drawings are provided as examples, the technical features of the present specification are not limited to the specific names used in the drawings below.

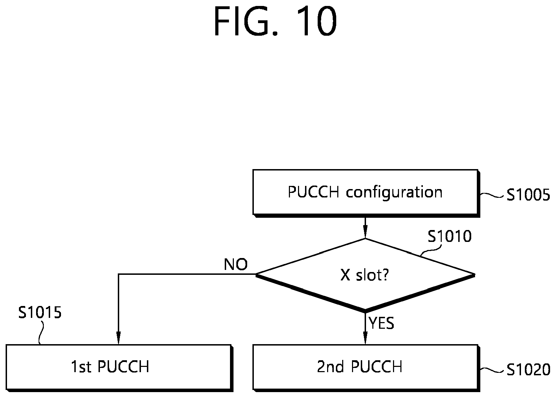

FIG. 10 to FIG. 14 illustrate examples of PUCCH transmission and reception operations in different forms based on the above-described embodiment. The present specification is not limited to FIGS. 10 to 14, and descriptions overlapping with those described above may be omitted.

Referring to FIG. 10, the UE/terminal receives PUCCH configuration from the network (S1005). The UE may perform PUCCH transmission based on PUCCH configuration. Since a more specific embodiment for this is the same as that described later (and/or previously described), repeated description of redundant content will be omitted for convenience of description.

In the meantime, if the slot in which the PUCCH is configured according to the PUCCH configuration is not the X slot (S1010/NO), the UE/terminal may transmit the first PUCCH (S1015). If the slot in which the PUCCH is configured according to the PUCCH configuration is the X slot (S1010/YES), the LTE can transmit the second PUCCH (S1020). Since a more specific embodiment for this is the same as that described later (and/or previously described), repeated description of redundant content will be omitted for convenience of description.

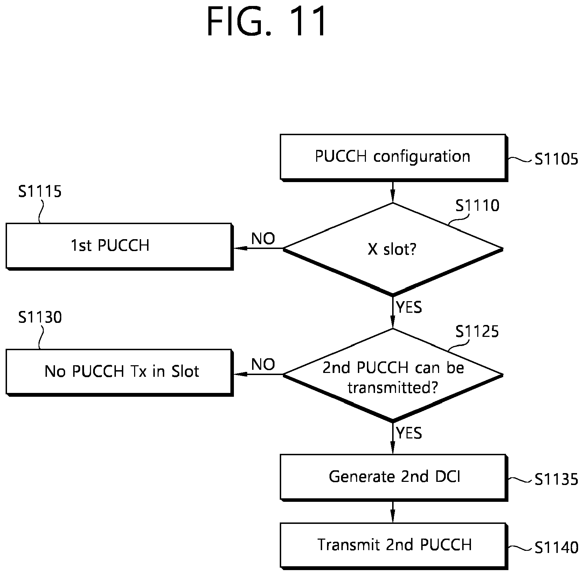

Referring to FIG. 11, the UE/terminal receives PUCCH configuration from the network (S1105). The LTE may perform PUCCH transmission based on PUCCH configuration. Since a more specific embodiment for this is the same as that described later (and/or previously described), repeated description of redundant content will be omitted for convenience of description.

In the meantime, if the slot in which the PUCCH is configured according to the PUCCH configuration is not the X slot (S1110/NO), the UE may transmit the first PUCCH (S1115). If the slot in which the PUCCH is configured according to the PUCCH configuration is the X slot (S1110/YES), the UE may determine whether transmission of the second PUCCH is possible in the corresponding slot X (S1125). If it is determined that the second PUCCH can be transmitted in the corresponding X slot (S1125/YES), the UE can generate a second UCI (S1135) and transmit the second UCI through the second PUCCH (S1140). Meanwhile, if it is determined that transmission of the second PUCCH is not possible in the corresponding slot X (S1125/NO), PUCCH transmission is not performed in the slot. Since a more specific embodiment for this is the same as that described later (and/or previously described), repeated description of redundant content will be omitted for convenience of description.

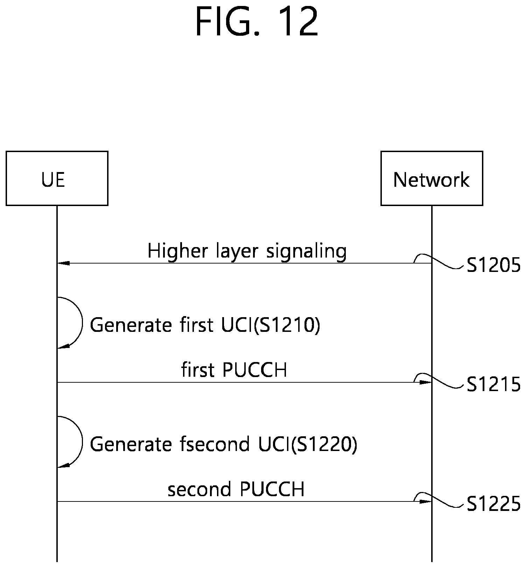

Referring to FIG. 12, a LTE may receive configuration information for to a PUCCH from a network (e.g., at least one base station) through higher layer signaling (e.g., RRC message, MAC signaling, etc.) (S1205). The configuration for the PUCCH may include at least one or more of, for example, information related to PUCCH time resources (e.g., start symbol, number of symbols), information related to PUCCH frequency resources (e.g., starting PRB), information related to whether or not PUCCH group hopping is performed, information related to PUCCH power, CS related information, information related to orthogonal codes; information related to the PUCCH format, information related to PUCCH repetitions (e.g., number of repetition slots, frequency hopping during repetition, etc.), and information related to PUCCH DMRS, but is not limited thereto. The configuration for the PUCCH may further include additional configuration for partial PUCCH transmission. Since a more specific embodiment for this is the same as that described later (and/or previously described), repeated description of redundant content will be omitted for convenience of description.

The LTE may generate a first UCI including at least one of HARQ-ACK, CSI Part I, CSI Part II, and SR (S1210), and may transmit the first UCI through the first PUCCH (S1215). The first UCI generation and/or the first PUCCH transmission may be performed based on the configuration for the PUCCH (S1205) obtained through higher layer signaling. Since a more specific embodiment for this is the same as that described later (and/or previously described), repeated description of redundant content will be omitted for convenience of description.

Meanwhile, when PUCCH transmission is configured in slot X, the UE may generate a second UCI (S1220). Generation of the second UCI may be performed by copying/selecting a part/portion of the first UCI. Generation of the second UCI may be based on the L1-priority, and for the same L1 priority, the UE may generate the second UCI based on the L2 priority (e.g., clause 1, etc.). In generating the second UCI, the LTE may generate the second UCI based on information on resources available in the X-slot (e.g., number of available symbols/continuous symbol duration, etc.). Since a more specific embodiment for this is the same as that described later (and/or previously described), repeated description of redundant content will be omitted for convenience of description.

The LTE may transmit the second PUCCH on the X slot (S1225). The second PUCCH may be transmitted once (e.g., Section 2.1) or multiple times (e.g., Section 2.2) in X slot. For example, the UE may map the second PUCCH to slot X (e.g., Section 2.1). Since a more specific embodiment for this is the same as that described later (and/or previously described), repeated description of redundant content will be omitted for convenience of description.

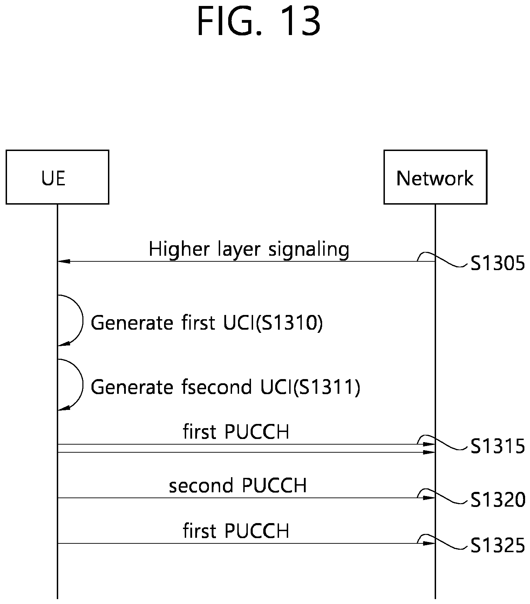

Regarding higher layer signaling in FIG. 13 (S1305), transmission of the first PUCCH (S1315, S1325), and mapping/transmission on the X-slot of the second PUCCH (S1320), the description in FIG. 12 may be referred to.

In FIG. 13 , the first UCI generation (S1310) and the second UCI generation (S1311) may be performed in advance (before the X-slot). For example, the UE/terminal may generate a first UCI and generate a second UCI based on the first UCI. Alternatively, the UE may simultaneously generate the first UCI and the second UCI. Alternatively, UE may generate the first UCI by first generating the second UCI and adding content to the second UCI. The UE may transmit the second PUCCH only when the second UCI generated in the X-slot is transmittable (e.g., when there are available resources capable of mapping the second UCI of the corresponding X-slot). For example, without generating the second UCI for every X-slot, the LTE may transmit the previously generated second UCI only in a corresponding X-slot in which transmission is possible. Since a more specific embodiment for this is the same as that described later (and/or previously described), repeated description of redundant content will be omitted for convenience of description.

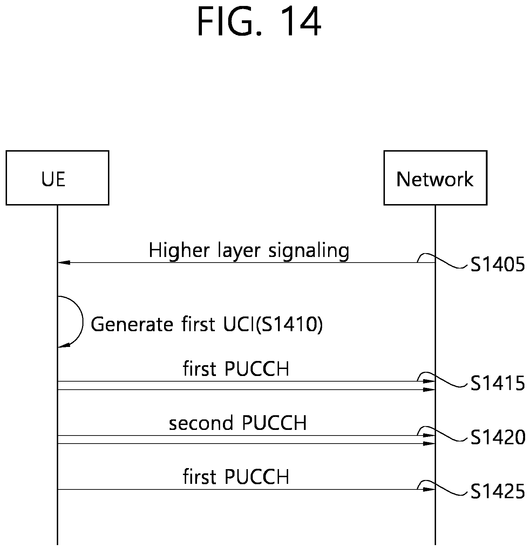

In FIG. 14, the description of FIG. 12 may be referred to regarding higher layer signaling (S1405), transmission of the first PUCCH (S1415, S1430), and mapping/transmission of the second PUCCH on the X-slot (S1420).

According to FIG. 14, the UE can generate the second PUCCH directly from the first PUCCH without needing to separately generate the second UCI for the second PUCCH. As an example, the UE may configure the second PUCCH by selecting only some (a part/portion) of the symbols of the first PUCCH as described above, but the present specification is not limited thereto. Since a more specific embodiment for this is the same as that described later (and/or previously described), repeated description of redundant content will be omitted for convenience of description.

Hereinafter, embodiments of the present specification will be described once again from various subject points of view.

Hereinafter, for a better understanding of the examples of the present specification, the disclosure of the present specification will be described through drawings. The following drawings are made to explain a specific example of the present specification. Since the names of specific devices or names of specific signals/messages/fields described in the drawings are provided as examples, the technical features of the present specification are not limited to the specific names used in the drawings below.

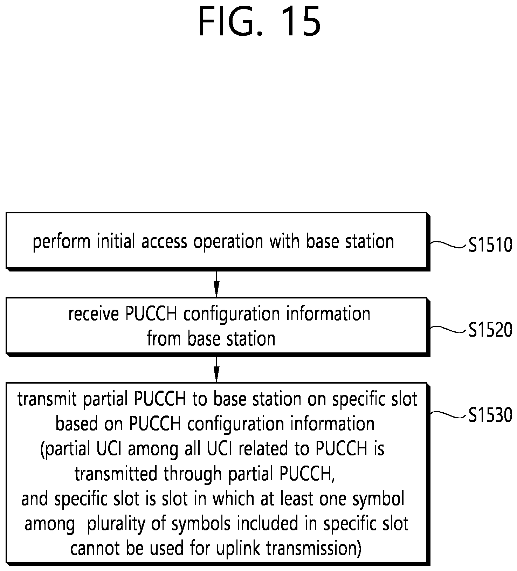

FIG. 15 is a flowchart of a method of transmitting a partial physical uplink control channel (PUCCH) from the UE/terminal-perspective according to an embodiment of the present specification.

According to FIG. 15, the UE/terminal may perform an initial access operation with a base station (S15 10). Since a more specific embodiment for this is the same as that described later (and/or previously described), repeated description of redundant content will be omitted for convenience of description.

The UE/terminal may receive PUCCH configuration information from the base station (S1520). Since a more specific embodiment for this is the same as that described later (and/or previously described), repeated description of redundant content will be omitted for convenience of description.

The UE may transmit the partial PUCCH to the base station on a specific slot based on the PUCCH configuration information (S1530). Since a more specific embodiment for this is the same as that described later (and/or previously described), repeated description of redundant content will be omitted for convenience of description.

Here, partial UCI among all/entire uplink control information (UCI) related to the PUCCH may be transmitted through the partial PUCCH, and the specific slot may be a slot in which at least one symbol among a plurality of symbols included in the specific slot cannot be used for uplink transmission. Since a more specific embodiment for this is the same as that described later (and/or previously described), repeated description of redundant content will be omitted for convenience of description.

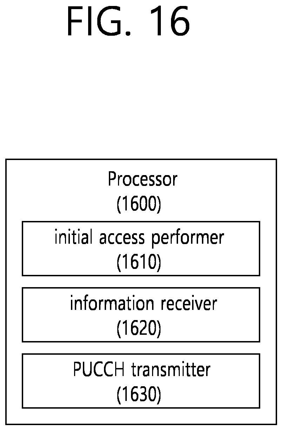

FIG. 16 is a block diagram of an apparatus for transmitting a partial physical uplink control channel (PUCCH) from a terminal/UE-perspective according to an embodiment of the present specification.

According to FIG. 16, a processor 1600 may include an initial access performer 1610, an information receiver 1620, and a PUCCH transmitter 1630. The processor herein may correspond to a processor described above and/or described later. Since a more specific embodiment for this is the same as that described later (and/or previously described), repeated description of redundant content will be omitted for convenience of description.

The initial access performer 1610 may be configured to perform an initial access operation with a base station. Since a more specific embodiment for this is the same as that described later (and/or previously described), repeated description of redundant content will be omitted for convenience of description.

The information receiver 1620 may be configured to control a transceiver to receive physical uplink control channel (PUCCH) configuration information from the base station. Since a more specific embodiment for this is the same as that described later (and/or previously described), repeated description of redundant content will be omitted for convenience of description.

The PUCCH transmitter 1630 may be configured to control the transceiver to transmit a partial PUCCH on a specific slot to the base station based on the PUCCH configuration information. Since a more specific embodiment for this is the same as that described later (and/or previously described), repeated description of redundant content will be omitted for convenience of description.

Here, the partial UCI among all/entire UCI related to a PUCCH may be transmitted through the partial PUCCH, and the specific slot may be a slot in which at least one symbol among a plurality of symbols included in the specific slot cannot be used for uplink transmission. Since a more specific embodiment for this is the same as that described later (and/or previously described), repeated description of redundant content will be omitted for convenience of description.

Although not shown separately, the following embodiments may also be provided in the present specification.

According to one embodiment, a user equipment may comprise: a transceiver; at least one memory; and at least one processor operatively connected to the transceiver and the at least one memory, wherein the processor is configured to: perform an initial access operation with a base station; control the transceiver to receive physical uplink control channel (PUCCH) configuration information from the base station; and control the transceiver to transmit a partial PUCCH on a specific slot to the base station based on the PUCCH configuration information, wherein partial uplink control information (UCI) among all UCI related to a PUCCH is transmitted through the partial PUCCH, and wherein the specific slot is a slot in which at least one symbol among a plurality of symbols included in the specific slot cannot be used for uplink transmission. Since a more specific embodiment for this is the same as that described later (and/or previously described), repeated description of redundant content will be omitted for convenience of description.

According to another embodiment, an apparatus may comprise: at least one memory; and at least one processor operatively connected to the at least one memory, wherein the processor is configured to: perform an initial access operation with a base station; control a transceiver to receive physical uplink control channel (PUCCH) configuration information from the base station; and control the transceiver to transmit a partial PUCCH on a specific slot to the base station based on the PUCCH configuration information, wherein partial uplink control information (UCI) among all UCI related to a PUCCH is transmitted through the partial PUCCH, and wherein the specific slot is a slot in which at least one symbol among a plurality of symbols included in the specific slot cannot be used for uplink transmission.

According to another embodiment, in at least one computer readable medium containing instructions based on execution by at least one processor, the base station and initial access configured to perform an operation, configured to control a transceiver to receive physical uplink control channel (PUCCH) configuration information from the base station, and to transmit a partial PUCCH to the base station on a specific slot based on the PUCCH configuration information; It is configured to control, but partial UCI among all uplink control information (UCI) related to the PUCCH is transmitted through the partial PUCCH, and the specific slot transmits some symbols among a plurality of symbols included in the specific slot for uplink transmission. It may be a recording medium characterized in that it is an unusable slot. Since a more specific embodiment for this is the same as that described later (and/or previously described), repeated description of redundant content will be omitted for convenience of description.

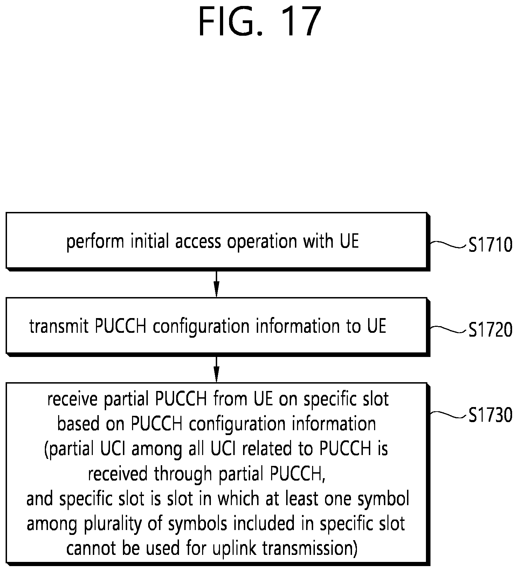

FIG. 17 is a flowchart of a method of receiving a partial physical uplink control channel (PUCCH) from the point of view of a base station according to an embodiment of the present specification.

The base station may perform an initial access operation with the UE/terminal (S1710). Since a more specific embodiment for this is the same as that described later (and/or previously described), repeated description of redundant content will be omitted for convenience of description.

The PUCCH configuration information may be transmitted to the UE/terminal (S1720). Since a more specific embodiment for this is the same as that described later (and/or previously described), repeated description of redundant content will be omitted for convenience of description.

The base station may receive the partial PUCCH on a specific slot from the UE/terminal based on the PUCCH configuration information (S1730). Since a more specific embodiment for this is the same as that described later (and/or previously described), repeated description of redundant content will be omitted for convenience of description.

Here, partial UCI among all/entire uplink control information (UCI) related to a PUCCH may be received through the partial PUCCH, and the specific slot may be a slot in which at least one symbol among a plurality of symbols included in the specific slot cannot be used for uplink transmission. Since a more specific embodiment for this is the same as that described later (and/or previously described), repeated description of redundant content will be omitted for convenience of description.

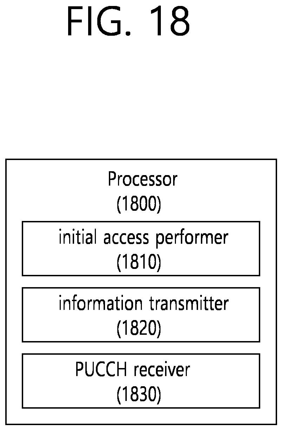

FIG. 18 is a block diagram of an apparatus for receiving a partial physical uplink control channel (PUCCH) from the point of view of a base station, according to an embodiment of the present specification.

According to FIG. 18, a processor 1800 may include an initial access performer 1810, an information transmitter 1820, and a PUCCH receiver 1830. The processor herein may correspond to a processor described above and/or described later. Since a more specific embodiment for this is the same as that described later (and/or previously described), repeated description of redundant content will be omitted for convenience of description.

The initial access performer 1810 may be configured to perform an initial access operation with a UE/terminal. Since a more specific embodiment for this is the same as that described later (and/or previously described), repeated description of redundant content will be omitted for convenience of description.

The information transmitter 1820 may be configured to control the transceiver to transmit physical uplink control channel (PUCCH) configuration information to the UE/terminal. Since a more specific embodiment for this is the same as that described later (and/or previously described), repeated description of redundant content will be omitted for convenience of description.

The PUCCH receiver 1830 may be configured to control the transceiver to receive a partial PUCCH on a specific slot from the UE/terminal based on the PUCCH configuration information. Since a more specific embodiment for this is the same as that described later (and/or previously described), repeated description of redundant content will be omitted for convenience of description.

Here, partial UCI among all/entire UCI related to PUCCH may be received through the partial PUCCH, and the specific slot may be a slot in which at least one symbol among a plurality of symbols included in the specific slot cannot be used for uplink transmission.

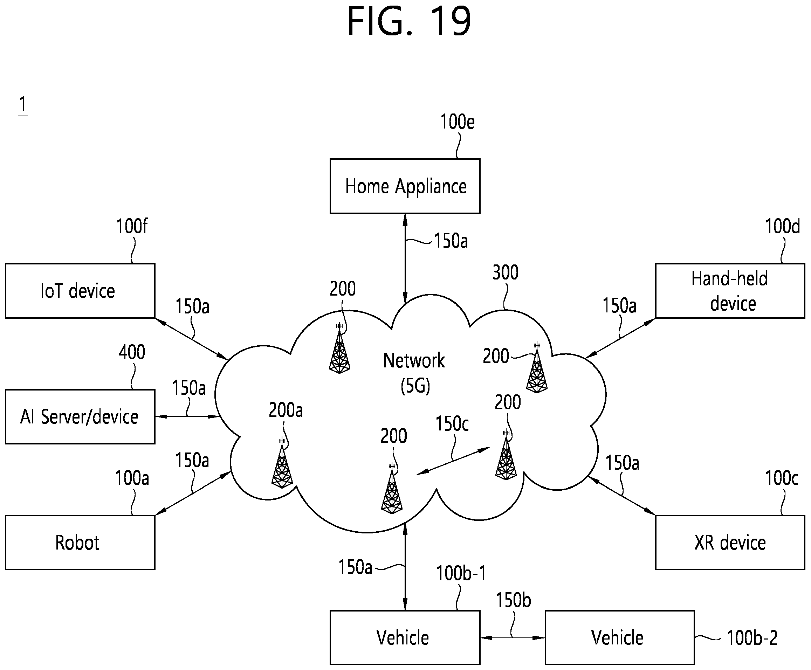

FIG. 19 shows an exemplary communication system (1), according to an embodiment of the present specification.

Referring to FIG. 19, a communication system (1) to which various embodiments of the present specification are applied includes wireless devices, Base Stations (BSs), and a network. Herein, the wireless devices represent devices performing communication using Radio Access Technology (RAT) (e.g., 5GNew RAT (NR)) or Long-Term Evolution (LTE)) and may be referred to as communication/radio/SG devices. The wireless devices may include, without being limited to, a robot (100a), vehicles (100b-1, 100b-2), an eXtended Reality (XR) device (100c), a hand-held device (100d), a home appliance (100e), an Internet of Things (IoT) device (100f), and an Artificial Intelligence (AI) device/server (400). For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, and so on. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device (200a) may operate as a BS/network node with respect to other wireless devices.

The wireless devices (100a~100f) may be connected to the network (300) via the BSs (200). An Artificial Intelligence (AI) technology may be applied to the wireless devices (100a~100f) and the wireless devices (100a~100f) may be connected to the AI server (400) via the network (300). The network (300) may be configured using a 3G network, a 4G (e.g., LTE) network, or a 5G (e.g., NR) network. Although the wireless devices (100a~100f) may communicate with each other through the BSs (200)/network (300), the wireless devices (100a~100f) may perform direct communication (e.g., sidelink communication) with each other without passing through the BSs/network. For example, the vehicles (100b-1, 100b-2) may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices (100a~100f).

Wireless communication/connections (150a, 150b, 150c) may be established between the wireless devices (100a~100f)/BS (200), or BS (200)BS (200). Herein, the wireless communication/connections may be established through various RATs (e.g., 5GNR) such as uplink/downlink communication (150a), sidelink communication (150b) (or D2D communication), or inter BS communication (150c) (e.g., relay, Integrated Access Backhaul (IAB)). The wireless devices and the BSs/the wireless devices may transmit/receive radio signals to/from each other through the wireless communication/connections (150a, 150b, 150c). For example, the wireless communication/connections (150a, 150b, 150c) may transmit/receive signals through various physical channels. For this, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present specification.

Meanwhile, in NR, multiple numerologies (or subcarrier spacing (SCS)) for supporting various 5G services may be supported. For example, in case an SCS is 15kHz, a wide area of the conventional cellular bands may be supported, and, in case an SCS is 30kHz/60kHz dense-urban, lower latency, and wider carrier bandwidth may be supported. In case the SCS is 60kHz or higher, a bandwidth that is greater than 24.25GHz may be used in order to overcome phase noise.

An NR frequency band may be defined as two different types of frequency ranges (FR1, FR2). The values of the frequency ranges may be changed (or varied), and, for example, the two different types of frequency ranges (FR1, FR2) may be as shown below in Table 4. Among the frequency ranges that are used in an NR system, FR1 may mean a "sub 6GHz range", and FR2 may mean an "above 6GHz range" and may also be referred to as a millimeter wave (mmW).

[Table 6]

| Frequency Range designation | Corresponding frequency range | Subcarrier Spacing |
| --- | --- | --- |
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 5, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 may include an unlicensed band. The unlicensed band may be used for various purposes, e.g., the unlicensed band for vehicle-specific communication (e.g., automated driving).

[Table 7]

| Frequency Range designation | Corresponding frequency range | Subcarrier Spacing |
| --- | --- | --- |
| FR1 | 410MHz - 7125MHz | 15, 30, 60kHz |
| FR2 | 24250MHz - 52600MHz | 60, 120, 240kHz |

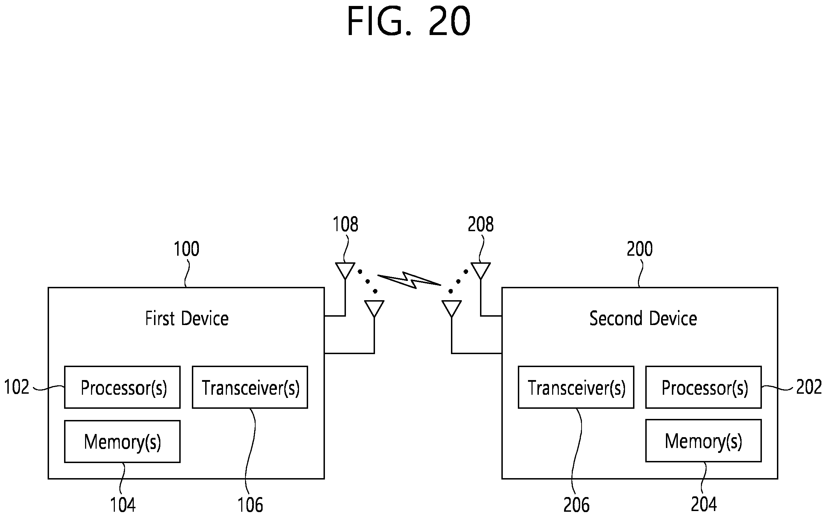

Hereinafter, an example of wireless devices to which the present specification is applied will be described in detail. FIG. 20 shows an exemplary wireless device to which the present specification can be applied.

Referring to FIG. 20, a first wireless device (100) and a second wireless device (200) may transmit radio signals through a variety of RATs (e.g., LTE, NR). Herein, {the first wireless device (100) and the second wireless device (200)} may correspond to {the wireless device (100x) and the BS (200)} and/or {the wireless device (100x) and the wireless device (100x)} of FIG. 19.

The first wireless device (100) may include one or more processors (102) and one or more memories (104) and additionally further include one or more transceivers (106) and/or one or more antennas (108). The processor(s) (102) may control the memory(s) (104) and/or the transceiver(s) (106) and may be configured to implement the descriptions, functions, procedures, proposals, methods, and/or operational flowcharts disclosed in this document. For example, the processor(s) (102) may process information within the memory(s) (104) to generate first information/signals and then transmit radio signals including the first information/signals through the transceiver(s) (106). The processor(s) (102) may receive radio signals including second information/signals through the transceiver (106) and then store information obtained by processing the second information/signals in the memory(s) (104). The memory(s) (104) may be connected to the processor(s) (102) and may store various information related to operations of the processor(s) (102). For example, the memory(s) (104) may store software code including instructions for performing a part or the entirety of processes controlled by the processor(s) (102) or for performing the descriptions, functions, procedures, proposals, methods, and/or operational flowcharts disclosed in this document. Herein, the processor(s) (102) and the memory(s) (104) may be a part of a communication modem/circuit/chip designed to implement RAT (e.g., LTE or NR). The transceiver(s) (106) may be connected to the processor(s) (102) and transmit and/or receive radio signals through one or more antennas (108). Each of the transceiver(s) (106) may include a transmitter and/or a receiver. The transceiver(s) (106) may be interchangeably used with Radio Frequency (RF) unit(s). In the present specification, the wireless device may represent a communication modem/circuit/chip.

The second wireless device (200) may include one or more processors (202) and one or more memories (204) and additionally further include one or more transceivers (206) and/or one or more antennas (208). The processor(s) (202) may control the memory(s) (204) and/or the transceiver(s) (206) and may be configured to implement the descriptions, functions, procedures, proposals, methods, and/or operational flowcharts disclosed in this document. For example, the processor(s) (202) may process information within the memory(s) (204) to generate third information/signals and then transmit radio signals including the third information/signals through the transceiver(s) (206). The processor(s) (202) may receive radio signals including fourth information/signals through the transceiver(s) (206) and then store information obtained by processing the fourth information/signals in the memory(s) (204). The memory(s) (204) may be connected to the processor(s) (202) and may store various information related to operations of the processor(s) (202). For example, the memory(s) (204) may store software code including instructions for performing a part or the entirety of processes controlled by the processor(s) (202) or for performing the descriptions, functions, procedures, proposals, methods, and/or operational flowcharts disclosed in this document. Herein, the processor(s) (202) and the memory(s) (204) may be a part of a communication modem/circuit/chip designed to implement RAT (e.g., LTE or NR). The transceiver(s) (206) may be connected to the processor(s) (202) and transmit and/or receive radio signals through one or more antennas (208). Each of the transceiver(s) (206) may include a transmitter and/or a receiver. The transceiver(s) (206) may be interchangeably used with RF transceiver(s). In the present specification, the wireless device may represent a communication modem/circuit/chip.

Hereinafter, hardware elements of the wireless devices (100, 200) will be described in more detail. One or more protocol layers may be implemented by, without being limited to, one or more processors (102, 202). For example, the one or more processors (102, 202) may implement one or more layers (e.g., functional layers such as PHY, MAC, RLC, PDCP, RRC, and SDAP). The one or more processors (102, 202) may generate one or more Protocol Data Units (PDUs) and/or one or more Service Data Unit (SDUs) according to the descriptions, functions, procedures, proposals, methods, and/or operational flowcharts disclosed in this document. The one or more processors (102, 202) may generate messages, control information, data, or information according to the descriptions, functions, procedures, proposals, methods, and/or operational flowcharts disclosed in this document. The one or more processors (102, 202) may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers (106, 206). The one or more processors (102, 202) may receive the signals (e.g., baseband signals) from the one or more transceivers (106, 206) and obtain the PDUs, SDUs, messages, control information, data, or information according to the descriptions, functions, procedures, proposals, methods, and/or operational flowcharts disclosed in this document.

The one or more processors (102, 202) may be referred to as controllers, microcontrollers, microprocessors, or microcomputers. The one or more processors (102, 202) may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors (102, 202). The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors (102, 202) or stored in the one or more memories (104, 204) so as to be driven by the one or more processors (102, 202). The descriptions, functions, procedures, proposals, methods, and/or operational flowcharts disclosed in this document may be implemented using firmware or software in the form of code, instructions, and/or a set of instructions.

The one or more memories (104, 204) may be connected to the one or more processors (102, 202) and store various types of data, signals, messages, information, programs, code, instructions, and/or commands. The one or more memories (104, 204) may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories (104, 204) may be located at the interior and/or exterior of the one or more processors (102, 202). The one or more memories (104, 204) may be connected to the one or more processors (102, 202) through various technologies such as wired or wireless connection.

The one or more transceivers (106, 206) may transmit user data, control information, and/or radio signals/channels, mentioned in the methods and/or operational flowcharts of this document, to one or more other devices. The one or more transceivers (106, 206) may receive user data, control information, and/or radio signals/channels, mentioned in the descriptions, functions, procedures, proposals, methods, and/or operational flowcharts disclosed in this document, from one or more other devices. For example, the one or more transceivers (106, 206) may be connected to the one or more processors (102, 202) and transmit and receive radio signals. For example, the one or more processors (102, 202) may perform control so that the one or more transceivers (106, 206) may transmit user data, control information, or radio signals to one or more other devices. The one or more processors (102, 202) may perform control so that the one or more transceivers (106, 206) may receive user data, control information, or radio signals from one or more other devices. The one or more transceivers (106, 206) may be connected to the one or more antennas (108, 208) and the one or more transceivers (106, 206) may be configured to transmit and receive user data, control information, and/or radio signals/channels, mentioned in the descriptions, functions, procedures, proposals, methods, and/or operational flowcharts disclosed in this document, through the one or more antennas (108, 208). In this document, the one or more antennas may be a plurality of physical antennas or a plurality of logical antennas (e.g., antenna ports). The one or more transceivers (106, 206) may convert received radio signals/channels, and so on, from RF band signals into baseband signals in order to process received user data, control information, radio signals/channels, and so on, using the one or more processors (102, 202). The one or more transceivers (106, 206) may convert the user data, control information, radio signals/channels, and so on, processed using the one or more processors (102, 202) from the base band signals into the RF band signals. For this, the one or more transceivers (106, 206) may include (analog) oscillators and/or filters.

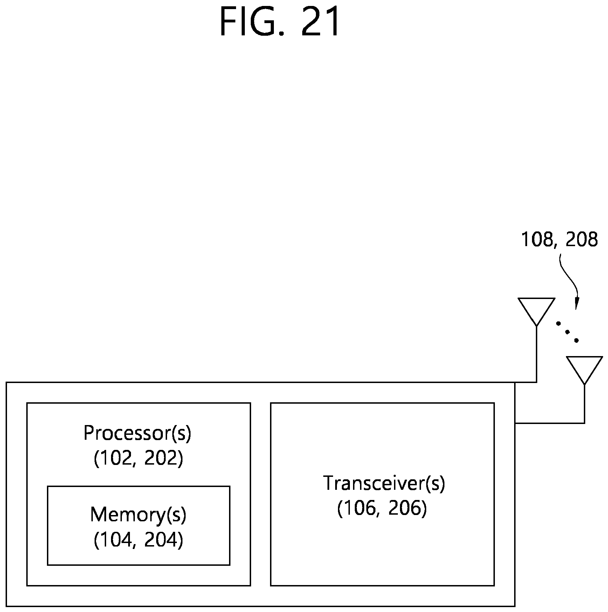

FIG. 21 shows another example of a wireless device applicable to the present specification.

According to FIG. 21, the wireless device may include at least one processor (102, 202), at least one memory (104, 204), at least one transceiver (106, 206), and/or one or more antennas (108, 208).

As a difference between the example of the wireless device described above in FIG. 20 and the example of the wireless device in FIG. 21, in FIG. 20, the processors 102 and 202 and the memories 104 and 204 are separated, but in the example of FIG. 21, the memories 104 and 204 are included in the processors 102 and 202.

Here, a detailed description of the processors 102 and 202, the memories 104 and 204, the transceivers 106 and 206, and the one or more antennas 108 and 208 is as described above, in order to avoid unnecessary repetition of description, description of repeated description will be omitted.

Claims in the present specification may be combined in various ways. For instance, technical features in method claims of the present specification may be combined to be implemented or performed in an apparatus (or device), and technical features in apparatus claims may be combined to be implemented or performed in a method. Further, technical features in method claim(s) and apparatus claim(s) may be combined to be implemented or performed in an apparatus. Further, technical features in method claim(s) and apparatus claim(s) may be combined to be implemented or performed in a method.

**Claims**

1. A method for transmitting a partial physical uplink control channel (PUCCH) performed by a user equipment (UE) in a wireless communication system, the method comprising:

   performing an initial access operation with a base station;
   receiving PUCCH configuration information from the base station; and
   transmitting the partial PUCCH on a specific slot to the base station based on the PUCCH configuration information,
   wherein partial uplink control information (UCI) among all UCI related to a PUCCH is transmitted through the partial PUCCH, and

18

wherein the specific slot is a slot in which at least one symbol among a plurality of symbols included in the specific slot cannot be used for uplink transmission.

**2.** The method of claim 1, wherein the specific slot is a special slot or an uplink slot of which at least a symbol cannot be used for uplink transmission.

**3.** The method of claim 2, wherein the special slot includes an uplink symbol, a downlink symbol, and a flexible symbol.

**4.** The method of claim 1, wherein the partial UCI is configured based on a priority of said all UCI.

**5.** The method of claim 4, wherein the priority is higher in order of HARQ-ACK, scheduling request (SR), channel state information (CSI) part 1, and CSI part 2.

**6.** The method of claim 1, wherein the LTE transmits the partial PUCCH based on available symbols among the plurality of symbols.

**7.** The method of claim 6, wherein the UE transmits the partial PUCCH based on specific symbols among the available symbols when the available symbols are not contiguous.

**8.** The method of claim 7, wherein the specific symbols are symbols with a largest number of contiguous symbols among the available symbols,
wherein the UE transmits the partial PUCCH on symbols with the largest number of contiguous symbols.

**9.** The method of claim 7, wherein the specific symbols are non-contiguous symbols within the specific slot in time domain,
wherein the UE separates and transmits the partial PUCCH on the non-contiguous symbols.

**10.** The method of claim 1, wherein the UE repeatedly transmits the partial PUCCH.

**11.** A user equipment comprising:

a transceiver;
at least one memory; and
at least one processor operatively connected to the transceiver and the at least one memory,
wherein the processor is configured to:

perform an initial access operation with a base station;
control the transceiver to receive physical uplink control channel (PUCCH) configuration information from the base station; and
control the transceiver to transmit a partial PUCCH on a specific slot to the base station based on the PUCCH configuration information,
wherein partial uplink control information (UCI) among all UCI related to a PUCCH is transmitted through the partial PUCCH, and
wherein the specific slot is a slot in which at least one symbol among a plurality of symbols included in the specific slot cannot be used for uplink transmission.

**12.** An apparatus comprising:

at least one memory; and
at least one processor operatively connected to the at least one memory,
wherein the processor is configured to:

perform an initial access operation with a base station;
control a transceiver to receive physical uplink control channel (PUCCH) configuration information from the base station; and
control the transceiver to transmit a partial PUCCH on a specific slot to the base station based on the PUCCH configuration information,
wherein partial uplink control information (UCI) among all UCI related to a PUCCH is transmitted through the partial PUCCH, and

wherein the specific slot is a slot in which at least one symbol among a plurality of symbols included in the specific slot cannot be used for uplink transmission.

13. At least one computer readable medium (CRM) storing instructions that, based on being executed by at least one processor, perform operations comprising:

performing an initial access operation with a base station;

controlling a transceiver to receive physical uplink control channel (PUCCH) configuration information from the base station; and

controlling the transceiver to transmit a partial PUCCH on a specific slot to the base station based on the PUCCH configuration information,

wherein partial uplink control information (UCI) among all UCI related to a PUCCH is transmitted through the partial PUCCH, and

wherein the specific slot is a slot in which at least one symbol among a plurality of symbols included in the specific slot cannot be used for uplink transmission.

14. A method for receiving a partial physical uplink control channel (PUCCH) performed by a base station in a wireless communication system, the method comprising:

performing an initial access operation with a user equipment (UE);

transmitting PUCCH configuration information to the UE; and

receiving the partial PUCCH on a specific slot from the UE based on the PUCCH configuration information,

wherein partial uplink control information (UCI) among all UCI related to a PUCCH is received through the partial PUCCH, and

wherein the specific slot is a slot in which at least one symbol among a plurality of symbols included in the specific slot cannot be used for uplink transmission.

15. A base station comprising:

a transceiver;

at least one memory; and

at least one processor operatively connected to the transceiver and the at least one memory,

wherein the processor is configured to:

perform an initial access operation with a user equipment (UE);

control a transceiver to transmit PUCCH configuration information to the UE; and

control the transceiver to receive the partial PUCCH on a specific slot from the UE based on the PUCCH configuration information,

wherein partial uplink control information (UCI) among all UCI related to a PUCCH is received through the partial PUCCH, and

wherein the specific slot is a slot in which at least one symbol among a plurality of symbols included in the specific slot cannot be used for uplink transmission.

# FIG. 1

AMF/UPF

AMF/UPF

5GC

NG    NG          NG    NG

Xn

gNB          gNB

Xn          Xn

NG-RAN

gNB

# FIG. 2

**NG-RAN**

gNB
- RRM between cells
- RB control
- Connection mobility control
- Wireless access control
- Measurement setting and provision
- Dynamic resource allocation (scheduler)

**5GC**

AMF
- NAS security
- Idle state mobility processing

SMF
- UE IP address allocation
- PDU session control

UPF
- Mobility anchoring
- PDU processing

Internet

EP 4 231 556 A1

# FIG. 3

Frame (10 ms)

Subframe (1 ms)

15kHz 1 slot (14 Symbol): 1ms Subframe

| 0 | 1 | 2 | 3 | 4 | 5 | 6 | 7 | 8 | 9 | 10 | 11 | 12 | 13 |

30kHz 1 slot (14 Symbol): 0.5ms

| 0 | 1 | 2 | 3 | 4 | 5 | 6 | 7 | 8 | 9 | 10 | 11 | 12 | 13 |

60kHz 1 slot (14 Symbol): 0.25ms

| 0 | 1 | 2 | 3 | 4 | 5 | 6 | 7 | 8 | 9 | 10 | 11 | 12 | 13 |

EP 4 231 556 A1

# FIG. 4

Downlink only, Or Uplink only

Frequency

RB index

Symbol Index

One TTI

DL Control channel          UL Control channel

EP 4 231 556 A1

# FIG. 5

Gigabyte transfer per second

Artificial Intelligence (e.g. Big Data)

eMBB

3D video (4K screen)

smart home/building

Work/play in the cloud

Augmented/Virtual/Mixed Reality

voice

Industrial automation (e.g. robots)

Smart networks (e.g. smart cities)

Mission critical applications (e.g. healthcare)

autonomous vehicle

mMTC

URLLC

edge computing

EP 4 231 556 A1

# FIG. 6

# FIG. 7

PUCCH transmission configured

# FIG. 8

| 0 | 1 | 2 | 3 | 4 | 5 | 6 | 7 | 8 | 9 | 10 | 11 | 12 | 13 |

PUCCH transmission configured

# FIG. 9

| 0 | 1 | 2 | 3 | 4 | 5 | 6 | 7 | 8 | 9 |

# FIG. 10

# FIG. 11

PUCCH configuration — S1105

S1110
X slot?

S1115
1st PUCCH ← NO

YES

S1125
2nd PUCCH can be transmitted?

S1130
No PUCCH Tx in Slot ← NO

YES

Generate 2nd DCI — S1135

Transmit 2nd PUCCH — S1140

# FIG. 12

# FIG. 13

# FIG. 14

# FIG. 15

perform initial access operation with base station — S1510

receive PUCCH configuration information
from base station — S1520

transmit partial PUCCH to base station on specific slot
based on PUCCH configuration information
(partial UCI among all UCI related to PUCCH is
transmitted through partial PUCCH,
and specific slot is slot in which at least one symbol
among  plurality of symbols included in specific slot
cannot be used for uplink transmission) — S1530

# FIG. 16

Processor
(1600)

initial access performer
(1610)

information receiver
(1620)

PUCCH transmitter
(1630)

# FIG. 17

| perform initial access operation with UE | S1710 |

↓

| transmit PUCCH configuration information to UE | S1720 |

↓

| receive partial PUCCH from UE on specific slot based on PUCCH configuration information (partial UCI among all UCI related to PUCCH is received through partial PUCCH, and specific slot is slot in which at least one symbol among plurality of symbols included in specific slot cannot be used for uplink transmission) | S1730 |

# FIG. 18

Processor
(1800)

initial access performer
(1810)

information transmitter
(1820)

PUCCH receiver
(1830)

# FIG. 19

# FIG. 20

EP 4 231 556 A1

# FIG. 21

108, 208

Processor(s)
(102, 202)

Memory(s)
(104, 204)

Transceiver(s)
(106, 206)

<div align="center">**INTERNATIONAL SEARCH REPORT**</div>

| International application No. |
| --- |
| **PCT/KR2021/014396** |

**A. CLASSIFICATION OF SUBJECT MATTER**

**H04L 1/00**(2006.01)i; **H04L 1/08**(2006.01)i; **H04L 5/00**(2006.01)i; **H04W 72/04**(2009.01)i; **H04W 72/12**(2009.01)i

According to International Patent Classification (IPC) or to both national classification and IPC

**B. FIELDS SEARCHED**

Minimum documentation searched (classification system followed by classification symbols)

H04L 1/00(2006.01); H04L 5/00(2006.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUCCH 설정 정보(PUCCH configuration information), 특정 슬롯(specific slot), 부분적 PUCCH(partial PUCCH), UCI

**C. DOCUMENTS CONSIDERED TO BE RELEVANT**

| Category* | Citation of document, with indication, where appropriate, of the relevant passages | Relevant to claim No. |
| --- | --- | --- |
| A | WO 2019-216654 A1 (LG ELECTRONICS INC.) 14 November 2019 (2019-11-14)<br>See paragraphs [0194]-[0201]; and figure 12. | 1-15 |
| A | WO 2016-068542 A2 (LG ELECTRONICS INC.) 06 May 2016 (2016-05-06)<br>See paragraphs [0154]-[0160]; claim 1; and figure 11. | 1-15 |
| A | SAMSUNG. Corrections on resource allocation for PUCCH. R1-1800450, 3GPP TSG RAN WG1 #AH 1801. Vancouver, Canada. 13 January 2018.<br>See pages 1-3. | 1-15 |
| A | KR 10-2020-0107940 A (PANASONIC INTELLECTUAL PROPERTY CORPORATION OF AMERICA) 16 September 2020 (2020-09-16)<br>See claims 1-17. | 1-15 |
| A | 3GPP; TSG RAN; NR; Physical layer procedure for control (Release 15). 3GPP TS 38.213 V15.11.0. 01 October 2020.<br>See pages 53-70. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 January 2022** | **17 January 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/014396**

| Patent document cited in search report | | | Publication date (day/month/year) | Patent family member(s) | | | Publication date (day/month/year) |
|---|---|---|---|---|---|---|---|
| WO | 2019-216654 | A1 | 14 November 2019 | CN | 110710308 | A | 17 January 2020 |
| | | | | EP | 3592082 | A1 | 08 January 2020 |
| | | | | EP | 3592082 | B1 | 03 November 2021 |
| | | | | JP | 2020-526089 | A | 27 August 2020 |
| | | | | JP | 6918992 | B2 | 11 August 2021 |
| | | | | KR | 10-2019-0129749 | A | 20 November 2019 |
| | | | | KR | 10-2196727 | B1 | 30 December 2020 |
| | | | | TW | 202014023 | A | 01 April 2020 |
| | | | | TW | I720477 | B | 01 March 2021 |
| | | | | US | 11109364 | B2 | 31 August 2021 |
| | | | | US | 2020-0178239 | A1 | 04 June 2020 |
| WO | 2016-068542 | A2 | 06 May 2016 | CN | 107113137 | A | 29 August 2017 |
| | | | | CN | 107113137 | B | 29 September 2020 |
| | | | | EP | 3214793 | A2 | 06 September 2017 |
| | | | | EP | 3214793 | B1 | 26 June 2019 |
| | | | | EP | 3525384 | A1 | 14 August 2019 |
| | | | | EP | 3525384 | B1 | 24 March 2021 |
| | | | | JP | 2017-534193 | A | 16 November 2017 |
| | | | | JP | 2020-005265 | A | 09 January 2020 |
| | | | | JP | 6880119 | B2 | 02 June 2021 |
| | | | | KR | 10-2017-0078591 | A | 07 July 2017 |
| | | | | KR | 10-2134877 | B1 | 26 August 2020 |
| | | | | US | 10231220 | B2 | 12 March 2019 |
| | | | | US | 10863488 | B2 | 08 December 2020 |
| | | | | US | 2017-0245265 | A1 | 24 August 2017 |
| | | | | US | 2019-0159200 | A1 | 23 May 2019 |
| | | | | WO | 2016-068542 | A3 | 23 June 2016 |
| KR | 10-2020-0107940 | A | 16 September 2020 | BR | 112020012282 | A2 | 24 November 2020 |
| | | | | CN | 111512573 | A | 07 August 2020 |
| | | | | EP | 3738224 | A1 | 18 November 2020 |
| | | | | EP | 3738224 | A4 | 06 January 2021 |
| | | | | JP | 2021-510462 | A | 22 April 2021 |
| | | | | RU | 2743955 | C1 | 01 March 2021 |
| | | | | US | 2021-0068148 | A1 | 04 March 2021 |
| | | | | WO | 2019-136709 | A1 | 18 July 2019 |

Form PCT/ISA/210 (patent family annex) (July 2019)